# EUROPEAN PATENT SPECIFICATION

(11) **EP 2 213 905 B1**
(45) Date of publication and mention of the grant of the patent: **09.09.2015**
(21) Application number: 09250216.0
(22) Date of filing: 28.01.2009
(51) Int. Cl.: F16G 11/04

(54) **Cable gripping device**
Seilklemme
Dispositif de blocage de câble

(43) Date of publication of application: 04.08.2010
(73) Proprietor: Thomas & Betts International, Inc., Wilmington, DE 19809 (US)
(72) Inventor: Cai, Xueming, Collierville, Tennessee 38017 (US); Magno, Joey D., Jr., Cordova, Tennessee 38016 (US)
(74) Representative: Howick, Nicholas Keith

(56) References cited:
- EP-A- 1 698 802
- EP-A- 1 967 759
- DE-A1- 3 505 437
- GB-A- 2 446 501
- US-A- 3 770 307
- US-A- 4 640 538
- US-A- 4 878 270

## Description

### Field of the Invention

In general the present invention relates to gripping devices and, in particular, to a device for releasably gripping a cable.

### Background

Industrial, commercial and residential construction sites typically require the suspension of equipment (such as HVAC units and ducts, lighting structures, various construction equipment and tools, audio speakers, and roofing materials) from structural members (such as overhead beams, ceilings, roofs, cranes, and girders). A suspension cable such as a metallic or rubber rope or wire is used to aid in this suspension. It is typically attached on one end to the structural member such as an eyebolt, anchor or shot fired member. Alternatively, the suspension cable can be inserted through a wedge device, looped around the equipment, and finally the cable is inserted through the wedge device a second time to retain the cable in place and suspend the equipment that is supported by the cable. Prior devices have inner jaws or teeth members that can twist within the housing and thereby weaken their grip on the cable. High stress is also created on the housing because the jaws do not move parallel to the cable within the housing. In addition, the teeth of prior devices can cut through the cable during high-tension operations and have a difficult time piercing smooth cable. If the cable is coated in insulation, the teeth can damage the appearance of the cable and cause the encased metal wires to be exposed. These prior devices also employ springs within them to create the wedge on the cable. Springs change properties over time and can wear out. Such prior wedge devices are not hermaphroditic and are difficult to manufacture and assemble. They also consist of many parts and are costly to manufacture.

US 3,770,307 discloses a cable lock and seal device which comprises a flexible cable and an enclosure fixedly secured to one end. A passage extends through the enclosure and is proportioned slidably to receive the distal end portion of the cable therethrough. A wedge element and a disk-shaped jam element are sealed within the enclosure, the wedge element including a ramp surface disposed at a small angle with respect to the passage and laterally spaced apart therefrom. The jam element is frictionally engaged between the ramp surface and cable portion whereby movement of the cable through the passage in one direction causes movement of the jam element laterally away therefrom and movement of the cable in a direction opposite the aforementioned direction causes movement of the jam element laterally toward the cable to thereby jam the cable between the passage walls and the jam element so as to prevent further movement thereof in that direction.

US 4,640,538 discloses a security seal which uses a stranded cable as a shackle. A seal body is provided with a pair of spaced apertures for receiving the end portions of a length of cable. A first cable end is inserted into a shackle aperture, and the second cable end is inserted into the second aperture, forming a cable loop at one end of the body forming a shackle. The second aperture leads to a cable channel which has a locking wheel and side walls retaining the wheel which cooperate to allow the cable to be inserted from said one end but lock the cable against retrograde movement after insertion. The wheel is provided with recesses around the peripheral surface.

US 4,878,270 discloses a rope tie-down clamp apparatus having a housing with a passage therethrough, and a clamping cam mounted for movement in the housing from a first position engaging the rope in the passage to a second position out of engagement with the rope.

Other examples are disclosed in GB 2 446 501, DE 3 505 437 and EP 1 698 802.

### Summary

The present invention eliminates the above difficulties and disadvantages by providing an improved device for gripping a cable. In particular, the present invention provides a device as recited in the claims. Because rotation friction is less than the sliding friction, upon entrance of a cable within the first entrance port, the cable moves between the first retention member and the first wall, causing the first retention member to simultaneously rotate and move toward the first exit port and away from the first wall until it abuts the first exit wall and rotates in place as the cable is pushed out the first exit port.

Because rotation friction is less than the sliding friction, extracting the cable is highly difficult without destroying the cable gripping device. For instance, when the cable is pulled near the first entrance port, the first retention member rolls toward the first entrance port and the first cable guide forces the first retention member toward the first entrance port, which slopes toward the first entrance port thereby wedging the cable with great force between the first wall of the cable gripping device and the first retention member.

The second entrance port is provided for receiving the free end of the cable after it leaves the first exit port and is inserted through an eyelet, for example, that is attached to equipment or bundled around a group of generally linear items for shipping such as logs or electrical distribution poles. Because rotation friction is less than the sliding friction, upon entrance of a cable within the second entrance port, the cable moves between the second retention member and the second wall, causing the second retention member to simultaneously rotate and move toward the second exit port and away from the second wall until it abuts the second exit wall and rotates in place as the cable is pushed out the second exit port.

Because rotation friction is less than the sliding friction, extracting the cable is highly difficult without destroying the cable gripping device. For instance, when the cable is pulled near the second entrance port, the second retention member rolls toward the second entrance port and the second cable guide forces the second retention member toward the second entrance port, which slopes toward the second entrance port thereby wedging the cable with great force between the second wall of the cable gripping device and the second retention member.

Release means may be provided in the present invention via apertures that are disposed on each side of the device and into which an actuation member is inserted for moving the retention members away from the first or second entrance walls.

### Brief Description of the Drawings

FIG. 1 is a side elevational view of an equipment hanging system having a device for gripping a cable of the present invention.
FIG. 2 is a perspective view of the device for gripping a cable of the present invention.
FIG. 3 is a perspective view of the device for gripping a cable of the present invention.
FIG. 4 is a perspective view of a retention member of the device for gripping a cable of the present invention.
FIG. 5 is a rear elevational view of a bundling system having the device for gripping a cable of the present invention.

### Detailed Description of the Preferred Embodiment(s)

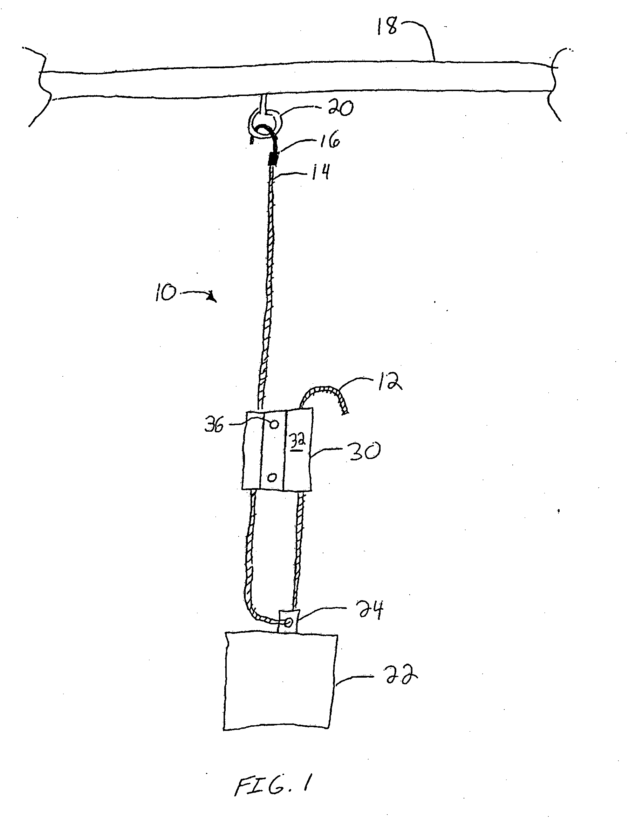

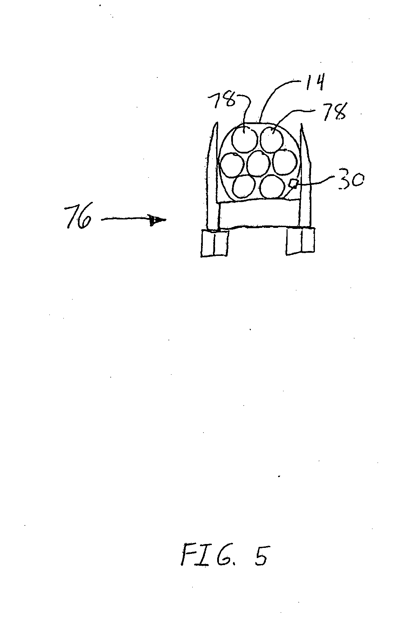

The above and other features, aspects, and advantages of the present invention will now be discussed in the following detailed description and appended claims, which are to be considered in conjunction with the accompanying drawings in which identical reference numbers designate like elements throughout the views. Shown in FIG 1 is a system for hanging equipment 22 or bundling a group of objects such as electrical distribution poles 78 (Shown in FIG. 5) for shipping. The system includes a cable 10 that may be secured to a structural member 18 such as a support beam by a hook 16, the hook 16 being secured to an attachment end 14 of the cable 10 via a crimp device or soldering. The hook 16 engages an eyelet 20 that is mounted on the structural member 18. The free end 12 of the cable 10 is inserted through device 30 and then inserted through an eye 24 that is secured to the equipment 22 and finally back through device 30 that secures the cable 10 from slipping and allows the equipment 22 to be suspended in air. The present system and device have many applications. Another application is shown in FIG. 5, which displays a truck 76 that is carrying a load of logs of electrical distribution poles 78. In this application device 30 and cable 10 are used to bundle poles 78.

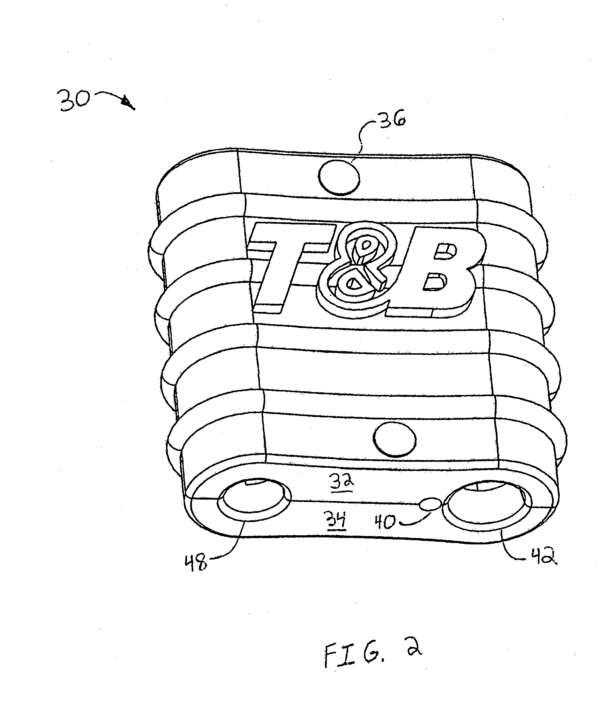

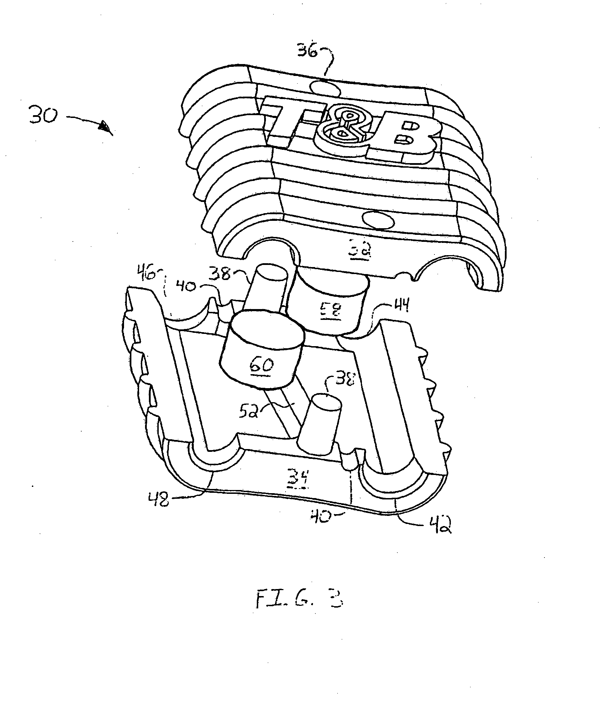

Turning now to the device 30 and that is shown in FIGS. 2 and 3, the device 30 is preferably constructed of a rust inhibited metal such as galvanized steel, but can also be constructed of a thermo-formed plastic. The device 30 is comprised of two half shells, first shell 32 and second shell 34, which are preferably welded together. Metal standoffs 38 are integrally formed into second shell 34 and made of the same material. Standoffs 38 are at preferably riveted at 36 to first shell 32 to stake the first shell 32 to the second shell 34 and keep the device 30 closed to prevent tampering in the field.

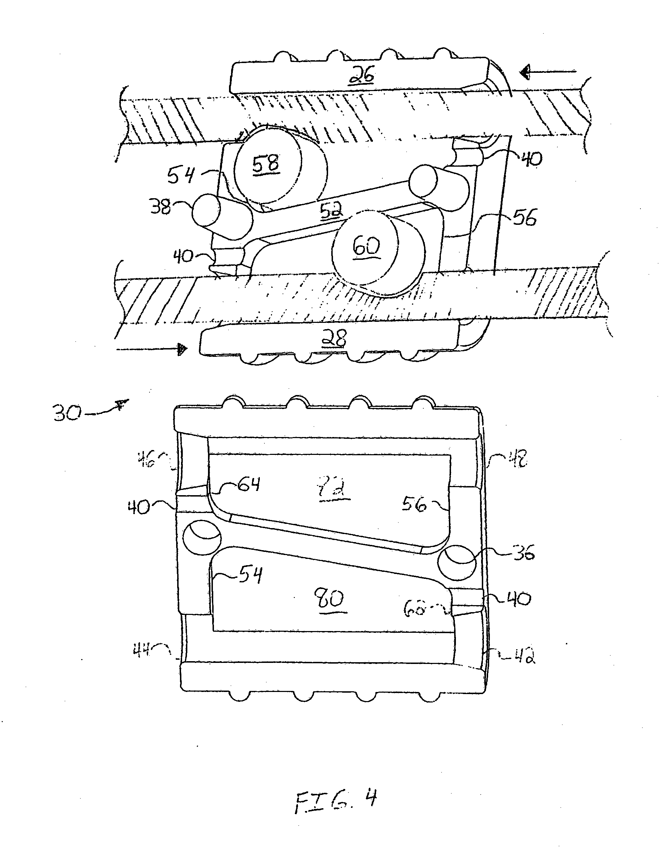

As shown in FIGS. 3 and 4, the device 30 only has four parts: the first and second shells 32 and 34, and the first and second retention members 58 and 60, respectively. This greatly reduces the manufacturing and installation costs of device 30. In particular, a first entrance port 42 is provided for receiving the free end 12 of cable 10. The first entrance port 42 is preferably circular in shape, but could be of any shape that would allow for insertion of cable 10. The first entrance port 42 is angled or beveled to aid in entrance of the free end 12 of cable 10 and is disposed in a first entrance wall 62. A first exit port 44 is provided opposite the first entrance port 42 that is preferably circular in shape, but could be of any shape that would allow for the passage through of cable 10. The first exit port 44 is axially aligned with the first entrance port 42. It is from the first exit port 44 where the free end 12 of cable 10 exits device 30. The first exit port 44 is disposed in a first exit wall 54. A first wall 26 is disposed between, and adjoins, the first entrance port 42 and the first exit port 44. The first wall 26 is smooth on the interior of the device 30 and its outer surface is of any desired texture or shape to aid in gripping of the device 30 by an installer.

In addition, a first cable guide 80 forms a pathway between the first entrance port 42 and the first exit port 44 that is trapezoidal in shape with the first entrance wall 62 and first exit wall 54 being parallel. The first wall 26 is formed at right angles to the first entrance wall 62 and first exit wall 54. A dividing wall 52, which is preferably constructed of the same material as the rest of the device 30, forms the fourth wall of the trapezoid and first cable guide 80.

A first retention member 58 is included that is preferably made of metal, but can be on any durable material such as thermo-formed plastic. The first retention member 58 is rotatably disposed within the first cable guide 80 such that upon entrance of the cable 10 within the first entrance port 42, the cable 10 moves between the first retention member 58 and the first wall 26, causing the first retention member 58 to simultaneously rotate and move toward the first exit port 44 and away from the first wall 26. This occurs until the first retention member 58 abuts the first exit wall 54 and rotates in place as the cable 10 is pushed out the first exit port 44. The first retention member 58 has a circular cross section and is disc-like in shape, but it is understood that it could also be spherical. The surface of the first retention member 58 that contacts cable 10 is preferably smooth to prevent abrasion of cable 10, but can also be of a rough texture for increased gripping of cable 10. The first retention member 58 rotates on an axis that is orthogonal to the direction of cable movement through the device 30 and freely moves among the first wall 26, first exit port 44, dividing wall 52 and first entrance wall 62 without cable 10 in the device 30 as a result of the first retention member 58 being unattached within the device 30. Therefore, easy insertion of cable 10 into the first entrance port 42, through the first cable guide 80 and out the first exit port 44 is provided.

After insertion of cable 10 in the manner described above, when cable 10 is pulled in the opposite direction by an installer grasping cable 10 near the first entrance port 42 and pulling away from the device 30, the first retention member 58 simultaneously rotates and moves toward the first entrance wall 62 and rises toward the first wall 26 until it is prevented from rotating further, wedging cable 10 between the first wall 26 and the first retention member 58. This wedging of cable 10 causes no degradation in the exterior of the cable 10 even if the cable 10 is sheathed in a plastic sleeve. When this wedging occurs the cable 10 cannot be pulled from the device 30 without extreme force that may actually break the device 30. Therefore the load the cable 10 has on it is prevented from slipping and falling to the ground.

A second entrance port 46 is also provided and that is angled or beveled for receiving the free end 12 of cable 10 after it leaves the first exit port 44 and is inserted through the eye 24, for example, that is attached to the equipment 22 or bundled around a group of generally linear items for shipping such items as logs or electrical distribution poles 78 as shown in FIG. 5. The second entrance port 46 is preferably circular in shape, but could be of any shape that would allow for insertion of cable 10. The second entrance port 46 is angled or beveled to aid in entrance of the free end 12 of cable 10 and is disposed in a second entrance wall 64. A second exit port 48 is provided opposite the second entrance port 46 that is preferably circular in shape, but could be of any shape that would allow for the passage through of cable 10. The second exit port 48 is axially aligned with the second entrance port 46. It is from the second exit port 48 where the free end 12 of cable 10 exits device 30. The second exit port 48 is disposed in a second exit wall 56. A second wall 28 is disposed between, and adjoins, the second entrance port 46 and the second exit port 48. The second wall 28 is smooth on the interior of the device 30 and its outer surface is of any desired texture or shape to aid in gripping of the device 30 by an installer.

In addition, a second cable guide 82 forms a pathway between the second entrance port 46 and the second exit port 48 that is trapezoidal in shape with the second entrance wall 64 and second exit wall 56 being parallel. The second wall 28 is formed at right angles to the second entrance wall 64 and second exit wall 56. A dividing wall 52, which is preferably constructed of the same material as the rest of the device 30, forms the fourth wall of the trapezoid and second cable guide 82.

A second retention member 60 is included that is preferably made of metal, but can be on any durable material such as thermo-formed plastic. The second retention member 60 is rotatably disposed within the second cable guide 82 such that upon entrance of the cable 10 within the second entrance port 46, the cable 10 moves between the second retention member 60 and the second wall 28, causing the second retention member 60 to simultaneously rotate and move toward the second exit port 48 and away from the second wall 28. This occurs until the second retention member 60 abuts the second exit wall 56 and rotates in place as the cable 10 is pushed out the second exit port 48. The second retention member 60 has a circular cross section and is disc-like in shape, but it is understood that it could also be spherical. The surface of the second retention member 60 that contacts cable 10 is preferably smooth to prevent abrasion of cable 10, but can also be of a rough texture for increased gripping of cable 10. The second retention member 60 rotates on an axis that is orthogonal to the direction of cable movement through the device 30 and freely moves among the second wall 28, second exit port 48, dividing wall 52 and second entrance wall 64 without cable 10 in the device 30 as a result of the second retention member 60 being unattached within the device 30. Therefore, easy insertion of cable 10 into the second entrance port 46, through the second cable guide 82 and out the second exit port 48 is provided.

After insertion of cable 10 in the manner described above, when cable 10 is pulled in the opposite direction by an installer grasping cable 10 near the second entrance port 46 and pulling away from the device 30, the second retention member 60 simultaneously rotates and moves toward the second entrance wall 64 and rises toward the second wall 28 until it is prevented from rotating further, wedging cable 10 between the second wall 28 and the second retention member 60. This wedging of cable 10 causes no degradation in the exterior of the cable 10 even if the cable 10 is sheathed in a plastic sleeve. When this wedging occurs the cable 10 cannot be pulled from the device 30 without extreme force that may actually break the device 30. Therefore the load the cable 10 has on it is prevented from slipping and falling to the ground.

It is also noted that the dividing wall 52 separates the first cable guide 80 from the second cable guide 82 such that the first and second retention members,58, 60, respectively, do not come in contact with each other.

As shown in FIGS 2 and 3, a cable release aperture 40 is disposed in the first shell 32 and the second shell 34 for releasing the grip of first and second retention members 58, 60, respectively, on cable 10 by insertion of an actuation member (not shown) therein. In particular, apertures 40 are in communication with the first cable guide 80 and second cable guide 82. The actuation member is preferably a plastic, metallic or wooden rod that is inserted into aperture 40 such that it abuts first retention member 58 or second retention member 60 depending on which aperture 40 the actuation member is inserted into. When contact is made between the actuation member and the first retention member 58, the first retention member 58 is pushed toward the first exit wall 54 thereby releasing wedging pressure on cable 10 as first retention member 58 moves away from cable 10 within the first cable guide 80. Cable 10 can then be removed from device 30 by pulling cable 10 from first entrance port 42 while the actuation member is pushing against the first retention member 58. Likewise, when contact is made between the actuation member and the second retention member 60, the second retention member 60 is pushed toward the second exit wall 56 thereby releasing wedging pressure on cable 10 as second retention member 60 moves away from cable 10 within the second cable guide 82. Cable 10 can then be removed from the second entrance port 46 of the device 30 by pulling cable 10 from second entrance port 46 while the actuation member is pushing against the second retention member 60.

Although the invention has been described in detail above, it is expressly understood that it will be apparent to persons skilled in the relevant art that the invention may be modified without departing from the scope of the invention. Various changes of form, design, or arrangement may be made to the invention without departing from the scope of the invention. Therefore, the above-mentioned description is to be considered exemplary, rather than limiting, and the true scope of the invention is that defined in the following claims.

## Claims

1. A device (30) for gripping a cable (10) having a free end (12), the device (30) comprising:
a first entrance port (42) for receiving the free end (12) of the cable (10);
a first entrance wall (62) wherein the first entrance port (42) is disposed;
a first exit port (44) aligned with the first entrance port (42) and from where the free end of the cable (10) exits the device (30);
a first exit wall (54) wherein the first exit port (44) is disposed;
a first wall (26) disposed between the first entrance port (42) and the first exit port (44), wherein the first wall (26) is an outside wall of the device;
a first cable guide (80) forming a pathway between the first entrance port (42) and the first exit port (44);
a first retention member (58) rotatably disposed within the first cable guide (80) such that upon entrance of the cable (10) within the first entrance port (42), the cable (10) moves between the first retention member (58) and the first wall (26), causing the first retention member (58) to simultaneously rotate and move toward the first exit port (44) and away from the first wall (62) until it abuts the first exit wall (54) and rotates in place against the cable as the cable (10) is pushed out the first exit port (44), and when the cable (10) is pulled toward the first entrance port (42), the first retention member (58) simultaneously rotates and moves toward the first entrance port (42) and the first wall (62), wedging the cable (10) between the first wall (62) and the first retention member (58);
a second entrance port (46) for receiving the free end of the cable (10);
a second entrance wall (64) wherein the second entrance port (46) is disposed;
a second exit port (48) aligned with the second entrance port (46) and from where the free end of the cable (10) exits the device (30);
a second exit wall (56) wherein the second exit port (48) is disposed;
a second wall (28) disposed between the second entrance port (46) and the second exit port (48), wherein the second wall (28) is an outside wall of the device;
a second cable guide (82) forming a pathway between the second entrance port (46) and the second exit port (48);
a second retention member (60) rotatably disposed within the second cable guide (82) such that upon entrance of the cable (10) within the second entrance port (46), the cable (10) moves between the second retention member (60) and the second wall (28), causing the second retention member (60) to simultaneously rotate and move toward the second exit port (48) and away from the second wall (28) until it abuts the second exit wall (56) and rotates in place against the cable as the cable (10) is pushed out the second exit port (48), and when the cable (10) is pulled toward the second entrance port (46), the second retention member (60) simultaneously rotates and moves toward the second entrance port (46) and the second wall (28), wedging the cable (10) between the second wall (28) and the second retention member (60); and **characterised in** comprising
first and second cable release apertures (40) in communication respectively with the first and second cable guides (80, 82) for releasing the grip of the respective first or second retention member (58, 60) on the cable (10) by insertion of an actuation member therein.

2. The device of claim 1 wherein the first retention member (58) freely moves among the first wall (26), first exit wall (54) and first entrance wall (62) without the cable (10) in the device.

3. The device (30) of claim 1, the device further comprising:
a dividing wall (52) separating the first cable guide (80) from the second cable guide (82) such that the first and second retention members (58, 60) do not come in contact with each other.

4. The device of any preceding claim wherein each retention member (58, 60) rotates on an axis that is orthogonal to the direction of cable movement through the device (30).

5. The device (30) of any preceding claim wherein each retention member (58, 60) is unattached within the device (30).

6. The device (30) of claim 3 wherein the first retention member (58) freely moves among the first wall (26), dividing wall (52), first exit wall (54) and first entrance wall (62) without the cable (10) in the device (30).

7. The device (30) of claim 3 wherein the second retention member (60) freely moves among the second wall (28), dividing wall (52), second exit wall (56) and second entrance wall (64) without the cable (10) in the device (30).

8. The device (30) of any preceding claim wherein each retention member (58, 60) is constructed of metal.

9. The device (30) of claim 3 further including at least one standoff (38) integral formed with and internal to the device (30).

10. The device (30) of claim 9 wherein the thickness of the first and second retention members (58, 60) is less than or equal to the height of the at least one standoff (38).

## Patentansprüche

1. Vorrichtung (30) zum Klemmen eines Seils (10), das ein freies Ende (12) aufweist, wobei die Vorrichtung (30) umfasst:
eine erste Eintrittsöffnung (42) zum Aufnehmen des freien Endes (12) des Seils (10);
eine erste Eintrittswand (62), in der die erste Eintrittsöffnung (42) angeordnet ist;
eine erste Austrittsöffnung (44), die mit der ersten Eintrittsöffnung (42) ausgerichtet ist und aus der das freie Ende des Seils (10) aus der Vorrichtung (30) austritt;
eine erste Austrittswand (54), in der die erste Austrittsöffnung (44) angeordnet ist;
eine erste Wand (26), die zwischen der ersten Eintrittsöffnung (42) und der ersten Austrittsöffnung (44) angeordnet ist, wobei die erste Wand (26) eine Außenwand der Vorrichtung ist;
eine erste Seilführung (80), die einen Weg zwischen der ersten Eintrittsöffnung (42) und der ersten Austrittsöffnung (44) bildet;
ein erstes Halteelement (58), das drehbar innerhalb der ersten Seilführung (80) angeordnet ist, sodass sich bei Eintritt des Seils (10) in die erste Eintrittsöffnung (42) das Seil (10) zwischen dem ersten Halteelement (58) und der ersten Wand (26) bewegt, wodurch das erste Halteelement (58) zum gleichzeitigen Drehen und Bewegen zur ersten Austrittsöffnung (44) und weg von der ersten Wand (62) veranlasst wird, bis es an den ersten Austrittswand (54) angrenzt und an der Stelle an dem Seil gedreht wird, während das Seil (10) durch die erste Austrittsöffnung (44) gedrückt wird, und, wenn das Seil (10) zur ersten Eintrittsöffnung (42) gezogen wird, das erste Halteelement (58) gleichzeitig gedreht wird und sich in Richtung der ersten Eintrittsöffnung (42) und der ersten Wand (62) bewegt, wodurch das Seil (10) zwischen der ersten Wand (62) und dem ersten Halteelement (58) verkeilt wird;
eine zweite Eintrittsöffnung (46) zum Aufnehmen des freien Endes des Seils (10);
eine zweite Eintrittswand (64), in der die zweite Eintrittsöffnung (46) angeordnet ist;
eine zweite Austrittsöffnung (48), die mit der zweiten Eintrittsöffnung (46) ausgerichtet ist und aus der das freie Ende des Seils (10) aus der Vorrichtung (30) austritt;
eine zweite Austrittswand (56), in der die zweite Austrittsöffnung (48) angeordnet ist;
eine zweite Wand (28), die zwischen der zweiten Eintrittsöffnung (46) und der zweiten Austrittsöffnung (48) angeordnet ist, wobei die zweite Wand (28) eine Außenwand der Vorrichtung ist;
eine zweite Seilführung (82), die einen Weg zwischen der zweiten Eintrittsöffnung (46) und der zweiten Austrittsöffnung (48) bildet;
ein zweites Halteelement (60), das drehbar innerhalb der zweiten Seilführung (82) angeordnet ist, sodass sich bei Eintritt des Seils (10) in die zweite Eintrittsöffnung (46) das Seil (10) zwischen dem zweiten Halteelement (60) und der zweiten Wand (28) bewegt, wodurch das zweite Halteelement (60) zum gleichzeitigen Drehen und Bewegen zur zweiten Austrittsöffnung (48) und weg von der zweiten Wand (28) veranlasst wird, bis es an den zweiten Austrittswand (56) angrenzt und an der Stelle an dem Seil gedreht wird, während das Seil (10) durch die zweite Austrittsöffnung (48) gedrückt wird, und, wenn das Seil (10) zur zweiten Eintrittsöffnung (46) gezogen wird, das zweite Halteelement (60) gleichzeitig gedreht wird und sich in Richtung der zweiten Eintrittsöffnung (46) und der zweiten Wand (28) bewegt, wodurch das Seil (10) zwischen der zweiten Wand (28) und dem zweiten Halteelement (60) verkeilt wird; und **dadurch gekennzeichnet, dass** die Vorrichtung umfasst:
erste und zweite Seilfreigabeöffnungen (40), die jeweils mit der ersten bzw. zweiten Seilführung (80, 82) in Verbindung sind, um den Griff des jeweiligen ersten bzw. zweiten Halteelements (58, 60) am Seil (10) durch Einführen eines Betätigungselements dort hinein zu lösen.

2. Vorrichtung nach Anspruch 1, wobei sich das erste Halteelement (58) frei zwischen der ersten Wand (26), der ersten Austrittswand (54) und der ersten Eintrittswand (62) ohne das Seil (10) in der Vorrichtung bewegt.

3. Vorrichtung (30) nach Anspruch 1, wobei die Vorrichtung ferner umfasst:
eine Trennwand (52), welche die erste Seilführung (80) von der zweiten Seilführung (82) trennt, sodass das erste und das zweite Halteelement (58, 60) nicht in Kontakt miteinander kommen.

4. Vorrichtung nach einem der vorhergehenden Ansprüche, wobei jedes Halteelement (58, 60) um eine Achse dreht, die orthogonal zu der Richtung der Seilbewegung durch die Vorrichtung (30) verläuft.

5. Vorrichtung (30) nach einem der vorhergehenden Ansprüche, wobei jedes Halteelement (58, 60) in der Vorrichtung (30) unbefestigt ist.

6. Vorrichtung (30) nach Anspruch 3, wobei sich das erste Halteelement (58) frei zwischen der ersten Wand (26), der Trennwand (52), der ersten Austrittswand (54) und der ersten Eintrittswand (62) ohne das Seil (10) in der Vorrichtung (30) bewegt.

7. Vorrichtung (30) nach Anspruch 3, wobei sich das zweite Halteelement (60) frei zwischen der zweiten Wand (28), der Trennwand (52), der zweiten Austrittswand (56) und der zweiten Eintrittswand (64) ohne das Seil (10) in der Vorrichtung (30) bewegt.

8. Vorrichtung (30) nach einem der vorhergehenden Ansprüche, wobei jedes Halteelement (58, 60) aus Metall gebaut ist.

9. Vorrichtung (30) nach Anspruch 3, ferner aufweisend mindestens einen Abstandsbolzen (38), der einstückig mit der und im Innern der Vorrichtung (30) ausgebildet ist.

10. Vorrichtung (30) nach Anspruch 9, wobei die Dicke des ersten und des zweiten Halteelements (58, 60) kleiner als die Höhe des mindestens einen Abstandsbolzens (38) ist bzw. dieser entspricht.

## Revendications

1. Dispositif (30) pour bloquer un câble (10) présentant une extrémité libre (12), le dispositif (30), comprenant:
un premier port d'entrée (42) pour recevoir l'extrémité libre (12) du câble (10);
une première paroi d'entrée (62) dans laquelle le premier port d'entrée (42) est formé;
un premier port de sortie (44) qui est aligné avec le premier port d'entrée (42) et à partir duquel l'extrémité libre du câble (10) sort du dispositif (30);
une première paroi de sortie (54) dans laquelle le premier port de sortie (44) est formé;
une première paroi (26) qui est disposée entre le premier port d'entrée (42) et le premier port de sortie (44), dans lequel la première paroi (26) est une paroi extérieure du dispositif;
un premier guide de câble (80) qui forme un chemin de passage entre le premier port d'entrée (42) et le premier port de sortie (44);
un premier élément de retenue (58) qui est disposé de façon rotative à l'intérieur du premier guide de câble (80) de telle sorte que lors de l'entrée du câble (10) à l'intérieur du premier port d'entrée (42), le câble (10) se déplace entre le premier élément de retenue (58) et la première paroi (26), entraînant le premier élément de retenue (58) à tourner simultanément et à se déplacer en direction du premier port de sortie (44) et à l'écart de la première paroi (62) jusqu'à ce qu'il bute contre la première paroi de sortie (54) et tourne en place contre le câble lorsque le câble (10) est poussé hors du premier port de sortie (44), et lorsque le câble (10) est tiré en direction du premier port d'entrée (42), le premier élément de retenue (58) tourne simultanément et se déplace en direction du premier port d'entrée (42) et de la première paroi (62), calant le câble (10) entre la première paroi (62) et le premier élément de retenue (58);
un deuxième port d'entrée (46) pour recevoir l'extrémité libre du câble (10);
une deuxième paroi d'entrée (64) dans laquelle le deuxième port d'entrée (46) est formé;
un deuxième port de sortie (48) qui est aligné avec le deuxième port d'entrée (46) et à partir duquel l'extrémité libre du câble (10) sort du dispositif (30);
une deuxième paroi de sortie (56) dans laquelle le deuxième port de sortie (48) est formé;
une deuxième paroi (28) qui est disposée entre le deuxième port d'entrée (46) et le deuxième port de sortie (48), dans lequel la deuxième paroi (28) est une paroi extérieure du dispositif;
un deuxième guide de câble (82) qui forme un chemin de passage entre le deuxième port d'entrée (46) et le deuxième port de sortie (48);
un deuxième élément de retenue (60) qui est disposé de façon rotative à l'intérieur du deuxième guide de câble (82) de telle sorte que lors de l'entrée du câble (10) à l'intérieur du deuxième port d'entrée (46), le câble (10) se déplace entre le deuxième élément de retenue (60) et la deuxième paroi (28), entraînant le deuxième élément de retenue (60) à tourner simultanément et à se déplacer en direction du deuxième port de sortie (48) et à l'écart de la deuxième paroi (28) jusqu'à ce qu'il bute contre la deuxième paroi de sortie (56) et tourne en place contre le câble lorsque le câble (10) est poussé hors du deuxième port de sortie (48), et lorsque le câble (10) est tiré en direction du deuxième port d'entrée (46), le deuxième élément de retenue (60) tourne simultanément et se déplace en direction du deuxième port d'entrée (46) et de la deuxième paroi (28), calant le câble (10) entre la deuxième paroi (28) et le deuxième élément de retenue (60); et **caractérisé en ce qu'**il comprend:
des première et deuxième ouvertures de libération de câble (40) en communication respectivement avec les premier et deuxième guides de câble (80, 82) pour libérer le blocage des premier ou deuxième éléments de retenue respectifs (58, 60) sur le câble (10) par l'insertion d'un élément d'actionnement dans celles-ci.

2. Dispositif (30) selon la revendication 1, dans lequel le premier élément de retenue (58) se déplace librement parmi la première paroi (26), la première paroi de sortie (54) et la première paroi d'entrée (62) sans le câble (10) dans le dispositif.

3. Dispositif (30) selon la revendication 1, le dispositif comprenant en outre une paroi de séparation (52) qui sépare le premier guide de câble (80) du deuxième guide de câble (82), de telle sorte que les premier et deuxième éléments de retenue (58, 60) n'entrent pas en contact l'un avec l'autre.

4. Dispositif (30) selon l'une quelconque des revendications précédentes, dans lequel chaque élément de retenue (58, 60) tourne sur un axe qui est orthogonal à la direction de déplacement du câble à travers le dispositif (30).

5. Dispositif (30) selon l'une quelconque des revendications précédentes, dans lequel chaque élément de retenue (58, 60) est non attaché à l'intérieur du dispositif (30).

6. Dispositif (30) selon la revendication 3, dans lequel le premier élément de retenue (58) se déplace librement parmi la première paroi (26), la paroi de séparation (52), la première paroi de sortie (54) et la première paroi d'entrée (62) sans le câble (10) dans le dispositif (30).

7. Dispositif (30) selon la revendication 3, dans lequel le deuxième élément de retenue (60) se déplace librement parmi la deuxième paroi (28), la paroi de séparation (52), la deuxième paroi de sortie (56) et la deuxième paroi d'entrée (64) sans le câble (10) dans le dispositif (30).

8. Dispositif (30) selon l'une quelconque des revendications précédentes, dans lequel chaque élément de retenue (58, 60) est constitué de métal.

9. Dispositif (30) selon la revendication 3, comprenant en outre au moins une douille (38) qui est intégralement formée avec et est interne au dispositif (30).

10. Dispositif (30) selon la revendication 9, dans lequel l'épaisseur des premier et deuxième éléments de retenue (58, 60) est inférieure ou égale à la hauteur de ladite au moins une douille (38).
